# EUROPÄISCHE PATENTANMELDUNG

(11) **EP 4 663 595 A1**
(43) Veröffentlichungstag der Anmeldung: **17.12.2025**
(21) Anmeldenummer: 25176322.3
(22) Anmeldetag: 14.05.2025
(51) Int. Cl.: B66F 9/06, B66F 9/075

(54) **VORRICHTUNG, VERFAHREN UND SYSTEM ZUM BETREIBEN EINES FLURFÖRDERZEUGS IN EINEM WARENLAGER**

(30) Priorität: 11.06.2024 DE 102024116308
(71) Anmelder: STILL GmbH, 22113 Hamburg (DE)
(72) Erfinder: Dierfeld, Sven, 20099 Hamburg (DE); Schüthe, Dennis, 21244 Buchholz (DE); Hindemith, Lukas, 21244 Buchholz (DE); Hinckeldeyn, Johannes, 22303 Hamburg (DE); Bergmann, Ansgar, 22941 Bargteheide (DE); Howey, Ansgar, 22926 Ahrensburg (DE); König, Ralf, 21365 Adendorf (DE)
(74) Vertreter: Patentship Patentanwaltgesellschaft

(57) **Zusammenfassung**

Die Erfindung betrifft eine Datenverarbeitungsvorrichtung bzw. Steuereinheit (123) zum Betreiben eines Flurförderzeugs (120a) zum Transport einer Vielzahl von Warenobjekten (140) in einem Warenlager. Die Datenverarbeitungsvorrichtung (123) umfasst eine Schnittstelle (123b), welche ausgebildet ist, eine Vielzahl von Sensordaten des Flurförderzeugs (120a) bei der Bewegung des Flurförderzeugs (120a) im Warenlager zu erhalten, wobei die Vielzahl von Sensordaten eine Vielzahl von Wärmebilddaten der Umgebung des Flurförderzeugs (120a) umfassen. Ferner umfasst die Datenverarbeitungsvorrichtung (123) eine Prozessoreinrichtung (123a), welche ausgebildet ist, auf der Grundlage der Vielzahl von Wärmebilddaten eine Temperaturkarte des Warenlagers zu erstellen oder zu aktualisieren, wobei die Temperaturkarte für eine Vielzahl von Punkten des Warenlagers einen jeweiligen Temperaturwert angibt. Die Datenverarbeitungsvorrichtung bzw. Steuereinheit (123) kann Teil des Flurförderzeugs (120a) oder ein eigenständiger Server sein.

## Beschreibung

Die Erfindung betrifft eine Vorrichtung, ein Verfahren und ein System zum Betreiben eines Flurförderzeugs, insbesondere eines Gabelstaplers, in einem Warenlager.

Für den Transport und die Lagerung von Produkten, Waren und Materialien werden oftmals Ladungsträger, beispielsweise Gitterboxen oder Paletten, insbesondere Europaletten, verwendet. Zur Handhabung derartiger Ladungsträger, z.B. in der Intralogistik, d.h. dem innerbetrieblichen Materialfluss, z.B. in einem Warenlager, werden Flurförderzeuge, z.B. Gabelstapler und dergleichen eingesetzt. Ein Warenlager ist in der Regel ein sehr dynamisches Umfeld, in dem die Steuerung der mobilen Flurförderzeuge üblicherweise entweder manuell, teilautomatisiert oder automatisiert erfolgt.

Moderne Flurförderzeuge sind häufig mit Sensoreinheiten, beispielsweise Bildkameras ausgestattet, welche ausgebildet sind, die Umgebung eines jeweiligen Flurförderzeugs zu erfassen, so dass Informationen über die Umgebung, beispielsweise ein Warenlager gewonnen werden können, um insbesondere auf der Grundlage der erfassten Sensordaten Warenlager zu verwalten und das Flurförderzeug zu steuern, insbesondere im automatisierten oder teilautomatisierten Betrieb.

Seit geraumer Zeit wird das Energiemanagement als Teil des Gebäudemanagements auch für Warenlager immer wichtiger. In der Regel besteht das Ziel des Energiemanagements darin, den Energieeinsatz beispielsweise zum Heizen oder Kühlen in einem Warenlager, die damit verbundenen Emissionen und den Energieverbrauch zu minimieren.

Vor diesem Hintergrund liegt der vorliegenden Erfindung die Aufgabe zu Grunde, eine verbesserte Vorrichtung sowie ein verbessertes Verfahren und System zum Betreiben eines Flurförderzeugs in einem Warenlager bereit zu stellen.

Diese Aufgabe wird gemäß einem ersten Aspekt durch eine Datenverarbeitungsvorrichtung zum Betreiben eines Flurförderzeugs in einem Warenlager gelöst, das zum Transport einer Vielzahl von Warenobjekten in dem Warenlager ausgebildet ist. Die Datenverarbeitungsvorrichtung gemäß dem ersten Aspekt umfasst eine Schnittstelle, welche ausgebildet ist, eine Vielzahl von Sensordaten des Flurförderzeugs bei der Bewegung des Flurförderzeugs im Warenlager zu erhalten, wobei die Vielzahl von Sensordaten eine Vielzahl von Wärmebilddaten der Umgebung des Flurförderzeugs umfassen. Ferner umfasst die Datenverarbeitungsvorrichtung gemäß dem ersten Aspekt eine Prozessoreinrichtung, welche ausgebildet ist, auf der Grundlage der Vielzahl von Wärmebilddaten eine Temperaturkarte des Warenlagers zu erstellen und/oder zu aktualisieren, wobei die Temperaturkarte für eine Vielzahl von Punkten des Warenlagers einen jeweiligen Temperaturwert angibt.

Gemäß einer Ausführungsform umfassen die Vielzahl von Sensordaten des Flurförderzeugs ferner eine Vielzahl von Positionsdaten des Flurförderzeugs, wobei die Prozessoreinrichtung ausgebildet ist, auf der Grundlage der Vielzahl von Wärmebilddaten und der Vielzahl von Positionsdaten die Temperaturkarte des Warenlagers zu erstellen oder zu aktualisieren.

In einer Ausführungsform ist die Prozessoreinrichtung ferner ausgebildet, auf der Grundlage der Vielzahl von Positionsdaten des Flurförderzeugs Steuersignale für das Flurförderzeug zu erzeugen, wobei die Steuersignale ausgebildet sind, das Flurförderzeug in dem Warenlager zu bewegen, d.h. zu steuern, beispielsweise um einen Transportauftrag auszuführen.

Gemäß einer Ausführungsform ist die Prozessoreinrichtung ferner ausgebildet, auf der Grundlage der Sensordaten mittels eines Objekterkennungsmechanismus die Warenobjekte der Vielzahl von Warenobjekten zu erkennen und auf der Grundlage der Temperaturkarte für jedes erkannte Warenobjekt eine Temperatur zu bestimmen.

In einer Ausführungsform umfasst der Objekterkennungsmechanismus ein künstliches neuronales Netzwerk, welches ausgebildet ist, die Warenobjekte der Vielzahl von Warenobjekten zu erkennen und auf der Grundlage der Temperaturkarte für jedes erkannte Warenobjekt eine Temperatur zu bestimmen.

Gemäß einer Ausführungsform ist die Prozessoreinrichtung ferner ausgebildet, auf der Grundlage der Temperaturkarte mittels eines Überwachungsmechanismus zu überwachen, ob die Temperatur an einem oder mehreren der Vielzahl von Punkten im Warenlager in einem jeweiligen vordefinierten Temperaturbereich liegt, beispielsweise niedriger als ein maximaler Temperaturschwellenwert ist.

In einer Ausführungsform umfasst der Überwachungsmechanismus ein künstliches neuronales Netzwerk, welches ausgebildet ist, zu überwachen, ob die Temperatur an einem oder mehreren der Vielzahl von Punkten im Warenlager in einem jeweiligen vordefinierten Temperaturbereich liegt.

Gemäß einem zweiten Aspekt wird die vorstehend genannte Aufgabe durch ein Flurförderzeug, insbesondere einen Gabelstapler, zum Transport einer Vielzahl von Warenobjekten in einem Warenlager gelöst. Dabei umfasst das Flurförderzeug eine Datenverarbeitungsvorrichtung gemäß dem ersten Aspekt und eine Wärmebilderfassungseinrichtung, insbesondere eine Wärmebildkamera, wobei die Wärmebilderfassungseinrichtung ausgebildet ist, die Vielzahl von Sensordaten mit der Vielzahl von Wärmebilddaten der Umgebung des Flurförderzeugs zu erfassen.

In einer Ausführungsform kann das Flurförderzeug gemäß dem zweiten Aspekt ferner Antriebsmittel umfassen, welche ausgebildet sind, das Flurförderzeug auf der Grundlage von Steuersignalen in dem Warenlager zu bewegen.

Gemäß einer Ausführungsform kann das Flurförderzeug ferner Lastaufnahmemittel, insbesondere Lastgabeln, umfassen, wobei die Lastaufnahmemittel, insbesondere Lastgabeln, ausgebildet sind, auf der Grundlage von Steuersignalen relativ zu einem Warenobjekt, beispielsweise einem Ladungsträger bewegt zu werden, um das Warenobjekt aufzunehmen.

Gemäß einem dritten Aspekt wird die vorstehend genannte Aufgabe durch ein System zum Betreiben einer Vielzahl von Flurförderzeugen in einem Warenlager gelöst. Das System gemäß dem dritten Aspekt umfasst eine Vielzahl von Flurförderzeugen gemäß dem zweiten Aspekt und eine Datenverarbeitungsvorrichtung gemäß dem ersten Aspekt zum Betreiben der Vielzahl von Flurförderzeugen in dem Warenlager.

Gemäß einem vierten Aspekt wird die vorstehend genannte Aufgabe durch ein Verfahren zum Betreiben eines Flurförderzeugs zum Transport einer Vielzahl von Warenobjekten in einem Warenlager gelöst. Das Verfahren gemäß dem vierten Aspekt umfasst die folgenden Schritte:
Erhalten einer Vielzahl von Sensordaten des Flurförderzeugs bei der Bewegung des Flurförderzeugs im Warenlager, wobei die Vielzahl von Sensordaten eine Vielzahl von Wärmebilddaten der Umgebung des Flurförderzeugs umfassen; und
Erstellen und/oder Aktualisieren einer Temperaturkarte des Warenlagers auf der Grundlage der Vielzahl von Wärmebilddaten, wobei die Temperaturkarte für eine Vielzahl von Punkten des Warenlagers einen jeweiligen Temperaturwert angibt.

Das Verfahren gemäß dem vierten Aspekt kann mittels der Datenverarbeitungsvorrichtung gemäß dem ersten Aspekt durchgeführt werden. Daher ergeben sich weitere Ausführungsformen des Verfahrens gemäß dem vierten Aspekt aus den vorstehend und nachstehend beschriebenen Ausführungsformen der Datenverarbeitungsvorrichtung gemäß dem ersten Aspekt.

Weitere Vorteile und Einzelheiten der Erfindung werden beispielhaft anhand der in den schematischen Figuren dargestellten Ausführungsbeispiele näher erläutert. Hierbei zeigt:
Figur 1 eine schematische Darstellung eines Flurförderzeugs zum Transport von Warenobjekten in einem Warenlager gemäß einer Ausführungsform;
Figur 2 eine schematische Darstellung eines erfindungsgemäßen Systems mit einer Vielzahl von Flurförderzeugen und einer zentralen Datenverarbeitungsvorrichtung gemäß einer Ausführungsform; und
Figur 3 ein Flussdiagramm mit Schritten eines Verfahrens zum Betreiben eines Flurförderzeugs zum Transport von Warenobjekten in einem Warenlager gemäß einer Ausführungsform.

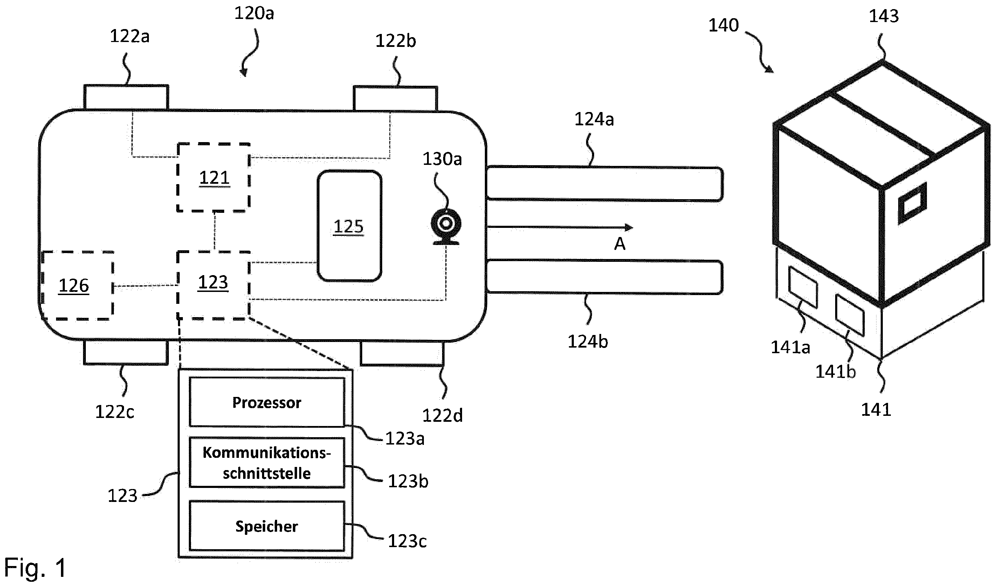

Figur 1 zeigt eine schematische Darstellung eines Flurförderzeugs 120a gemäß einer Ausführungsform zum Transportieren von Warenobjekten 140 in einem industriellen Umfeld, insbesondere einem Warenlager. Bei dem Flurförderzeug 120a kann es sich insbesondere um einen zeitweise autonom, teil-autonom und/oder manuell betriebenen, d.h. von einem Bediener geführten Gabelstapler 120a handeln. Bei den Warenobjekten 140 kann es sich beispielsweise um Waren 143, wie Verpackungskartons 143, handeln, welche auf einem jeweiligen Ladungsträger 141 angeordnet sind. Bei dem Ladungsträger 141 kann es sich beispielsweise um eine Palette 141, insbesondere eine Euro-Palette 141 oder eine Gitterbox 141 handeln.

Wie in Figur 1 dargestellt, kann das Flurförderzeug 120a ein Lastaufnahmemittel in Form eines Paares von Lastgabeln 124a,b umfassen, welche ausgebildet sind, in jeweilige Aussparungen, insbesondere Taschen 141a,b an einer Stirnseite eines Ladungsträgers 141 eingebracht zu werden, um den Ladungsträger 141 sowie die darauf angeordnete Ware 143 aufzunehmen. Gemäß weiteren Ausführungsformen kann das Lastaufnahmemittel auch als Dorn beispielsweise für die Aufnahme von Folienrollen oder Draht-Coils, als unterhakendes Lastaufnahmemittel (z. B. vergleichbar mit Müllfahrzeugen zur Aufnahme der Mülltonnen), oder als Ballen- und Rollenklammern beispielsweise zur Aufnahme von Papierrollen ausgebildet sein.

Das in Figur 1 dargestellte Flurförderzeug 120a umfasst ferner eine Antriebseinheit 121, beispielsweise wenigstens einen Motor 121, insbesondere einen batteriebetriebenen Elektromotor 121, wobei die Antriebseinheit 121 ausgebildet ist, das Flurförderzeug 120a und das Paar von Lastgabeln 124a,b relativ zu dem Warenobjekt 140 zu bewegen, um beispielsweise die Orientierung und/oder den Abstand zwischen dem Flurförderzeug 120a und der Warenobjekt 140, insbesondere dem Ladungsträger 141 zu ändern und/oder das Paar von Lastgabeln 124a,b anzuheben oder abzusenken. Zu diesem Zweck kann, wie in Figur 1 angedeutet, die Antriebseinheit 121 geeignet mit Rädern 122a-d und/oder dem Paar von Lastgabeln 124a,b des Flurförderzeugs 120a verbunden sein. Das Flurförderzeug 120a kann ferner ein Anzeige- und/oder Bedienfeld 125 zur Anzeige von Informationen und/oder zum Bedienen des Flurförderzeugs 120a umfassen.

Erfindungsgemäß umfasst das Flurförderzeug 120a eine Sensoreinheit 130a, die eine Wärmebildererfassungseinheit 130a umfasst, welche ausgebildet ist, bei der Bewegung des Flurförderzeugs 120a eine Vielzahl von Wärmebildern der Umgebung des Flurförderzeugs 120a in dem Warenlager zu erfassen. Vorzugsweise umfasst die Wärmebilderfassungseinheit 130a eine Infrarot-Kamera 130a. Neben einer Wärmebilderfassungseinheit kann die Sensoreinheit 130a weitere Sensoren, insbesondere einen Lidar-Sensor 130a und/oder einen Radar-Sensor 130a zur Erfassung der Umgebung des Flurförderzeugs 120a umfassen, beispielsweise zum Erfassen von Positionsdaten des Flurförderzeugs 120a, d.h. von Daten, welche eine relative und/oder absolute Positionsbestimmung des Flurförderzeugs 120a in dem Warenlager ermöglichen.

Wie in Figur 1 angedeutet, kann die Sensoreinheit 130a in Form der Wärmebilderfassungseinheit 130a vorzugsweise derart an dem Flurförderzeug 120a montiert sein, dass ein Blickfeld 131a der Wärmebilderfassungseinheit 130a im Wesentlichen entlang einer Vorwärtsbewegungsrichtung A des Flurförderzeugs 120a liegt. Vorzugsweise kann die Wärmebilderfassungseinheit 130a in der Symmetrieebene zwischen den zwei Lastgabeln 124a,b montiert sein. Neben der Wärmebilderfassungseinheit 130a mit dem Blickfeld entlang der Vorwärtsbewegungsrichtung A des Flurförderzeugs 120a kann das Flurförderzeug 120a noch weitere Sensoreinheiten umfassen, beispielsweise eine Sensoreinheit mit einem Blickfeld entlang einer Rückwärtsbewegungsrichtung des Flurförderzeugs 120a und/oder eine Sensoreinheit mit einem Blickfeld senkrecht zu der Vorwärtsbewegungsrichtung A des Flurförderzeugs 120a.

Erfindungsgemäß umfasst das Flurförderzeug 120a ferner eine Datenverarbeitungsvorrichtung 123 (hierin auch als Steuereinheit 123 bezeichnet), welche beispielsweise einen oder mehrere Prozessoren oder Mikro-Controller 123a mit geeigneter Software umfassen kann und ausgebildet ist, das Flurförderzeug 120a zumindest teilweise automatisiert zu steuern. Wie in der Figur 1 dargestellt, umfasst die Datenverarbeitungsvorrichtung bzw. Steuereinheit 123 ferner eine Kommunikationsschnittstelle 123b, insbesondere zum Erhalten der Wärmebilddaten von der Wärmebilderfassungseinheit 130a, sowie einen, insbesondere nichtflüchtigen, Speicher 123c. Der Speicher 123c kann ausgebildet sein, Daten und ausführbaren Programmcode zu speichern, der, wenn von dem Prozessor 123a der Datenverarbeitungsvorrichtung bzw. Steuereinheit 123 ausgeführt, den Prozessor 123a veranlasst, die im Folgenden beschriebenen Funktionen, Operationen und Verfahren durchzuführen.

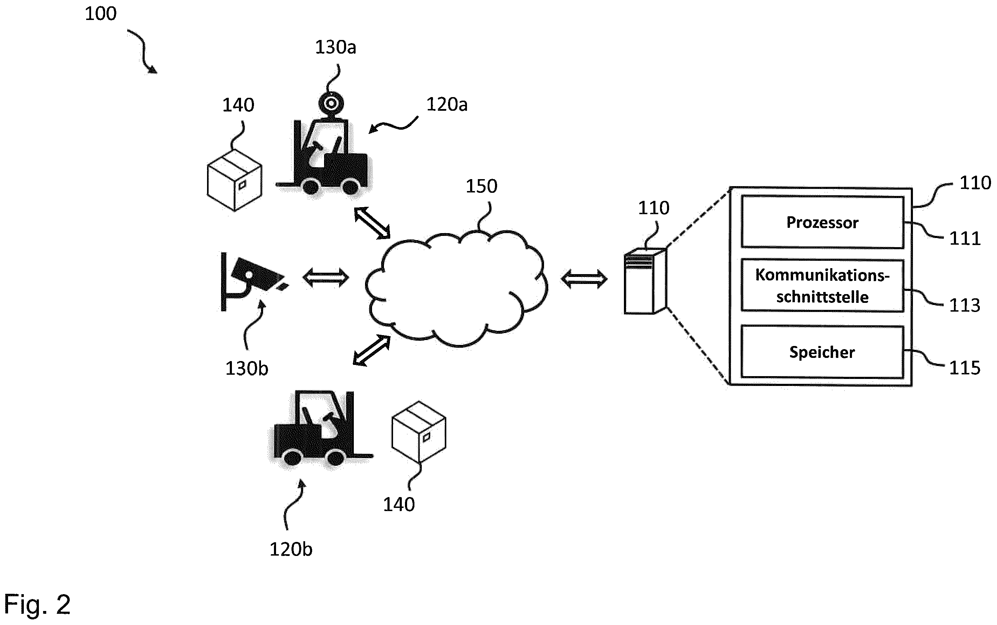

Figur 2 zeigt eine schematische Darstellung eines erfindungsgemäßen Systems 100 zum Betreiben des Flurförderzeugs 120a sowie einem oder mehreren weiterer Flurförderzeuge 120b, welche jeweils zeitweise automatisiert, teilautomatisiert und/oder manuell betreibbar sind, um Transportaufträge zum Transport von Warenobjekten 140 in dem Warenlager durchzuführen.

Das System 100 umfasst neben der Vielzahl von Flurförderzeugen 120a,b eine zentrale Datenverarbeitungsvorrichtung 110, beispielsweise einen Server 110, welche ausgebildet ist, mit jedem Flurförderzeug 120a,b der Vielzahl von Flurförderzeugen 120a,b zu kommunizieren, um beispielsweise jedem der Vielzahl von Flurförderzeugen 120a,b Transportaufträge zum Transport der Warenobjekte 140 in dem Warenlager zuzuteilen. Hierzu umfasst beispielsweise das Flurförderzeug 120a eine Kommunikationsschnittstelle 126, welche ausgebildet ist, mit einer entsprechenden Kommunikationsschnittstelle 113 der zentralen Datenverarbeitungsvorrichtung 110, zu kommunizieren, beispielsweise über ein drahtloses Kommunikationsnetzwerk 150, z.B. ein WLAN-Netzwerk oder ein Mobilfunknetzwerk. Über ein solches drahtloses Kommunikationsnetzwerk 150 kann das Flurförderzeug 120a und/oder die zentrale Datenverarbeitungsvorrichtung 110 ferner mit einer weiteren externen Sensoreinheit 130b kommunizieren, wie beispielsweise einer in einem Gang des Warenlagers angebrachten weiteren Wärmebildkamera 130b. Bei der in Figur 2 dargestellten zentralen Datenverarbeitungsvorrichtung 110 kann es sich beispielsweise um einen Industrie-PC 110 oder einen Cloud-Server, insbesondere einen Edge-Cloud-Server 110 handeln.

Wie in der Figur 2 dargestellt, umfasst die zentrale Datenverarbeitungsvorrichtung 110 eine Kommunikationsschnittstelle 113, einen oder mehrere Prozessoren 111 und einen, insbesondere nichtflüchtigen, Speicher 115. Der Speicher 115 kann ausgebildet sein, Daten und ausführbaren Programmcode zu speichern, der, wenn von dem Prozessor 111 der zentralen Datenverarbeitungsvorrichtung 110 ausgeführt, den Prozessor 111 veranlasst, die im Folgenden beschriebenen Funktionen, Operationen und Verfahren durchzuführen.

Erfindungsgemäß ist die Datenverarbeitungsvorrichtung in Form der Steuereinheit 123 des Flurförderzeugs 120a von Figur 1 oder in Form der zentralen Datenverarbeitungsvorrichtung 110 von Figur 2 ausgebildet, über die jeweilige Schnittstelle 123b bzw. 113, eine Vielzahl von Sensordaten des Flurförderzeugs 120a bei der Bewegung des Flurförderzeugs 120a im Warenlager zu erhalten, wobei die Vielzahl von Sensordaten eine Vielzahl von Wärmebilddaten der Umgebung des Flurförderzeugs 120a umfassen. Ferner ist die jeweilige Prozessoreinrichtung, d.h. die Steuereinrichtung 123a des Flurförderzeugs 120a von Figur 1 oder der Prozessor 111 der zentralen Datenverarbeitungsvorrichtung 110 von Figur 2, ausgebildet, auf der Grundlage der Vielzahl von Wärmebilddaten eine Temperaturkarte des Warenlagers zu erstellen und/oder zu aktualisieren, wobei die Temperaturkarte für eine Vielzahl von Punkten des Warenlagers einen jeweiligen Temperaturwert, d.h. eine Temperatur angibt. In einer Ausführungsform ist die Temperaturkarte eine dreidimensionale Temperaturkarte, welche für eine Vielzahl von Punkten im dreidimensionalen Raum des Warenlagers einen jeweiligen Temperaturwert angibt.

Wie bereits vorstehen beschrieben, können die Vielzahl von Sensordaten des Flurförderzeugs 120a neben den Wärmebilddaten ferner eine Vielzahl von Positionsdaten des Flurförderzeugs 120a umfassen. In dem Fall kann die Prozessoreinrichtung, d.h. die Steuereinrichtung 123a des Flurförderzeugs 120a von Figur 1 oder der Prozessor 111 der zentralen Datenverarbeitungsvorrichtung 110 von Figur 2, ausgebildet sein, die Temperaturkarte des Warenlagers auf der Grundlage der Vielzahl von Wärmebilddaten und der Vielzahl von Positionsdaten des Flurförderzeugs 120a zu erstellen und/oder zu aktualisieren. In einer Ausführungsform kann die Prozessoreinrichtung, d.h. die Steuereinrichtung 123a des Flurförderzeugs 120a von Figur 1 oder der Prozessor 111 der zentralen Datenverarbeitungsvorrichtung 110 von Figur 2, ferner ausgebildet sein, auf der Grundlage der Vielzahl von Positionsdaten des Flurförderzeugs 120a Steuersignale für das Flurförderzeug 120a zu erzeugen, wobei die Steuersignale ausgebildet sind, das Flurförderzeug 120a in dem Warenlager zu bewegen.

Wie bereits vorstehend beschrieben, kann zur Erfassung der Positionsdaten die Sensoreinheit 130a des Flurförderzeugs 120a neben der Wärmebildkamera 130a beispielsweise einen LiDAR-Sensor, insbesondere einen 3D-LiDAR-Sensor umfassen. Durch eine geeignete Kalibrierung der Wärmebildkamera und des LiDAR-Sensors und eine Fusionierung der Wärmebilddaten und der Positionsdaten kann die Temperaturkarte in Form einer 3D-Punktwolke mit Temperaturwerten durch die Prozessoreinrichtung, d.h. die Steuereinrichtung 123a des Flurförderzeugs 120a von Figur 1 oder der Prozessor 111 der zentralen Datenverarbeitungsvorrichtung 110 von Figur 2, erstellt werden.

Mit anderen Worten: die mittels der Wärmebildkamera erfassten Temperaturwerte werden somit einen Punkt im dreidimensionalen Raum zugeordnet, wodurch eine hoch genaue dreidimensionale Temperaturkarte entsteht. Der Vorteil der Bewegung des Flurförderzeugs 120a und damit der Sensoreinrichtung 130a besteht darin, dass sich die Positionsdaten, d.h. Punkte des LiDAR-Sensors zu einer hochauflösenden Temperaturkarte ergänzen lassen. Gemäß einer Ausführungsform wird die Temperaturkarte dabei nicht nur einmalig erstellt, sondern fortlaufend auf der Grundlage von neuen Daten aktualisiert. Dazu kann algorithmisch einem geometrischen Punkt in der als Punktewolke ausgebildeten Temperaturkarte immer wieder fortlaufend ein aktueller Temperaturwert hinzugefügt und somit aktualisiert werden. So entsteht eine dynamische 3D-Temperaturkarte, welche in der Lage ist, den zeitlichen Temperaturverlauf an beliebigen Orten in einem Warenlager abzubilden.

Wie der Fachmann erkennt, stellt die auf der Grundlage der Wärmebilddaten und der Positionsdaten erstellte Temperaturkarte eine Art "digitalen Zwilling" des Warenlagers dar. Die Erstellung eines solchen digitalen Zwillings in Form einer Karte auf der Grundlage von Positionsdaten ist beispielsweise aus der DE 10 2022 105 079 und der DE 10 2021 133 614 bekannt, auf die hiermit vollumfänglich Bezug genommen wird und für weitere Details verwiesen wird.

Gemäß einer Ausführungsform können neben den Wärmebilddaten und den Positionsdaten noch weitere von der Sensoreinrichtung 130a erfasste Daten in die Erzeugung des digitalen Zwillings einfließen, wie beispielsweise Luftfeuchte, Kohlenstoffdioxid-Konzentration, Lärm-Schallpegel und dergleichen. Beispielsweise kann die Sensoreinrichtung 130a ferner ein oder mehrere Mikrofone umfassen (insbesondere ein Mikrofon-Array, bei dem zusätzlich die Richtung bestimmt werden kann, aus der ein akustisches Signal aufgenommen wird, und je nach Anordnung auch die Distanz der Quelle. Ferner kann die Sensoreinrichtung 130a ausgebildet sein, die Stärke von Funksignalen in dem Warenlager zu erfassen, um zu bestimmen, welche Netzwerke in dem Warenlager vorhanden sind, mit welchem Signalpegel und in welchem Frequenzband (um Störquellen aufzufinden oder auf ein anderes Frequenzband oder Modulationssignal zu wechseln).

Gemäß einer Ausführungsform kann die Prozessoreinrichtung, d.h. die Steuereinrichtung 123a des Flurförderzeugs 120a von Figur 1 oder der Prozessor 111 der zentralen Datenverarbeitungsvorrichtung 110 von Figur 2, ausgebildet sein, auf der Grundlage der Sensordaten mittels eines Objekterkennungsmechanismus die Warenobjekte 140 der Vielzahl von Warenobjekten 140 zu erkennen und auf der Grundlage der Temperaturkarte für jedes erkannte Warenobjekt 140 eine Temperatur zu bestimmen. Bei einer solchen Ausführungsform können die Sensordaten insbesondere Bilddaten der Warenobjekte 140 umfassen, welche mit einer optischen Kamera der Sensoreinheit 130a erfasst werden. In einer Ausführungsform kann der Objekterkennungsmechanismus ein künstliches neuronales Netzwerk umfassen bzw. mittels eines künstlichen neuronalen Netzwerkes implementiert sein, welches ausgebildet ist, die Warenobjekte der Vielzahl von Warenobjekten 140 in den Bilddaten zu erkennen (um beispielsweise einen Typ eines jeweiligen Warenobjekts 140 zu bestimmen) und auf der Grundlage der Temperaturkarte für jedes erkannte Warenobjekt 140 eine Temperatur zu bestimmen.

Gemäß einer Ausführungsform kann die Prozessoreinrichtung, d.h. die Steuereinrichtung 123a des Flurförderzeugs 120a von Figur 1 oder der Prozessor 111 der zentralen Datenverarbeitungsvorrichtung 110 von Figur 2, ferner ausgebildet sein, auf der Grundlage der Temperaturkarte mittels eines Überwachungsmechanismus zu überwachen, ob die Temperatur an einem oder mehreren der Vielzahl von Punkten im Warenlager in einem jeweiligen vordefinierten Temperaturbereich liegt, beispielsweise einen maximalen Temperaturschwellenwert nicht übersteigt. In einer Ausführungsform kann der Überwachungsmechanismus ein künstliches neuronales Netzwerk umfassen bzw. mittels eines künstlichen neuronalen Netzwerks implementiert sein, welches ausgebildet ist, zu überwachen, ob die Temperatur an einem oder mehreren der Vielzahl von Punkten im Warenlager in einem jeweiligen vordefinierten Temperaturbereich liegt.

Beispielsweise kann ein Machine-Learning-Modell (ML-Modell), insbesondere ein neuronales Netzwerk mittels Trainingsdaten generiert, welches dazu ausgebildet ist, Unzulässigkeiten zu erkennen, z.B. dass eine Fassadenwand des Warenlagers an bestimmten Stellen zu kühl ist, oder dass in einem Kühllager des Warenlagers die Temperatur an bestimmten Stellen zu hoch ist. Dies kann je nach Einsatzort anders aussehen. Mit anderen Worten: gemäß einer Ausführungsform kann ein fertig trainiertes ML-Modell, insbesondere neuronales Netzwerk als Interferenz genutzt werden, um einen Nutzer Warnhinweise zu geben.

In einer weiteren Ausführungsform kann mittels der Wärmebildkamera der Sensoreinrichtung 130a auch eine Temperaturerfassung der Warenobjekte 140 in dem Warenlager erfolgen, beispielsweise bei einem Transport eines Warenobjekts 140 mit dem Flurförderzeug 120a. Das Warenobjekt 140 kann somit über längere Zeiträume einer Lagerung temperaturüberwacht werden. Die kann z.B. durch einen Operator mittels einer Markierung und setzen eines Schwellwertes über eine mobile Anwendung auf einem Tablet/Smartphone geschehen oder über ein AR/VR Device. Die Ware wird dann über die Lagerung getrackt und sollte ein Schwellwert überschritten werden, kann eine Warnmeldung ausgegeben werden. Diese kann manuell behoben werden, oder automatisiert durch Ankopplung eines Gebäudemanagementsystems (reduzieren der Temperatur im Warenlager).

Wie bereits vorstehend beschrieben, kann die Prozessoreinrichtung, d.h. die Steuereinrichtung 123a des Flurförderzeugs 120a von Figur 1 oder der Prozessor 111 der zentralen Datenverarbeitungsvorrichtung 110 von Figur 2, ein künstliches neuronales Netzwerk implementieren, welches ausgebildet ist, die Warenobjekte zu erkennen bzw. zu klassifizieren (z.B. Klasse: Fleisch, Fisch, Obst und dergleichen), und so trainiert ist, welcher Temperaturwert für jede Warenobjektklasse nicht überschritten werden darf. In einer weiteren Ausführungsform kann auch eine Anbindung an eine Energiepreisüberwachung erfolgen, um dann zu kühlen, wenn Strom günstig ist. Positionen im Lager, die länger kalt bleiben, können für temperatursensible Waren genutzt werden, ggf. Umlagerung veranlassen, wenn Strom gerade teuer ist und es noch genügend kalte Bereiche gibt.

Wie der Fachmann erkennt, können mittels der von der Prozessoreinrichtung, d.h. der Steuereinrichtung 123a des Flurförderzeugs 120a von Figur 1 oder des Prozessor 111 der zentralen Datenverarbeitungsvorrichtung 110 von Figur 2, erstellten Temperaturkarte eine Vielzahl von Prozessen in einem Warenlager effizienter gestaltet werden, wie zum Beispiel die Platzierung von Waren oder die Steuerung von Klimaanlagen und Heizungen. Beispielsweise müssen in der pharmazeutischen Industrie bestimmte Medikamente und Wirkstoffe unter kontrollierten Bedingungen produziert und gelagert werden, um ihre Wirksamkeit und Sicherheit zu gewährleisten. In der Lebensmittelindustrie müssen bestimmte Produkte unter kontrollierten Bedingungen hergestellt und gelagert werden, um ihre Qualität und Haltbarkeit sicherzustellen. In der Elektronikindustrie müssen bestimmte Produkte unter kontrollierten Bedingungen hergestellt und gelagert werden, um ihre Leistung und Zuverlässigkeit sicherzustellen. In der Automobilindustrie müssen bestimmte Komponenten unter kontrollierten Bedingungen hergestellt und gelagert werden, um ihre Leistung und Sicherheit zu gewährleisten.

Mittels der hier beschriebenen Ausführungsformen kann die Temperatur (und ggf. weitere physikalische Größen) an unterschiedlichen Punkten in einem Warenlager in Echtzeit überwacht und analysiert werden. Wie vorstehend beschrieben, können die Ergebnisse der Überwachung in Form der Temperaturkarte in ein neuronales Netz integriert werden, um eine genauere Vorhersage der Umgebung im Warenlager zu erstellen und die Prozesse im Warenlager zu optimieren. Um beispielsweise Wärmebrücken in einem Warenlager zu vermeiden, kann das neuronale Netzwerk, so trainiert und ausgebildet sein, Wärmequellen in einem Warenlager zu reduzieren. Dies kann beispielsweise in Form von Änderungen in der Warenlagerung erfolgen, z.B. gut isolierende Stoffe eher an die Gebäudeaußenseiten des Warenlagers anzubringen und andere Waren, die kühler sein müssen, in die Mitte des Warenlagers. Ferner kann der zeitliche Verlauf der Wärmeänderung auf Oberflächen des Warenlagers bestimmt werden, d.h. die Temperaturänderungen auf Oberflächen von Gebäudeteilen, Waren oder Maschinen des Warenlagers können erkannt werden. Damit können Rückschlüsse auf Fehler oder Anomalien gezogen werden, z.B. Heißlaufen von Maschinenaggregaten, Beschädigungen am Gebäude oder an Verpackungen im Warenlager.

Ferner kann mittels der von der Prozessoreinrichtung, d.h. der Steuereinrichtung 123a des Flurförderzeugs 120a von Figur 1 oder des Prozessor 111 der zentralen Datenverarbeitungsvorrichtung 110 von Figur 2, erstellten Temperaturkarte eine Optimierung der Wärmedämmung eines Warenlagers sowie eine Optimierung der Ausrichtung der klimatischen Einheiten (d.h. Heiz- oder Kühlvorrichtungen) erfolgen. Die Effizienz des Energiemanagements in einem Warenlager kann sehr präzise und über die Zeit verfolgt werden. Ferner können Wärmelecks leichter gefunden werden, die zu Kondensat oder Eisbildung führen. Eine bessere Kontrolle über die Kühlkette von Warenprodukten wird ermöglicht. Dadurch können Rückschlüsse nach der Qualitätssicherung gemacht werden, indem die Kühlkette überprüft werden kann. Das Auffinden von Schäden bei Fertigungsmaschinen kann erleichtert werden. Durch die Temperatur begründete Abweichungen und Verformungen bei der Fertigung von Waren können vermieden werden. Die 3D-Temperaturkarte kann in das BIM-Modell des Warenlagers integriert werden.

Gemäß einer weiteren Ausführungsform kann die von der Prozessoreinrichtung, d.h. der Steuereinrichtung 123a des Flurförderzeugs 120a von Figur 1 oder des Prozessor 111 der zentralen Datenverarbeitungsvorrichtung 110 von Figur 2, erstellte Temperaturkarte auch von einem Gebäudemanagementsystem des Warenlagers verwendet werden, welches ebenfalls auf der zentralen Datenverarbeitungsvorrichtung 110 implementiert sein kann. Auf der Grundlage der Temperaturkarte kann das Gebäudemanagementsystem eines Warenlagers beispielsweise folgendermaßen operieren: Die Temperatur in der Halle eines Warenlagers soll möglichst konstant gehalten werden. Steigt die Temperatur in der Halle an, wird ein Rolltor der Halle geöffnet, damit die Klimaanlage nicht laufen muss. Erkennt die eingestellte Logik in dem Bereich einen Anstieg größer als ein Maximum, wird automatisch das Rolltor geschlossen. Dadurch können Energieressourcen gespart werden.

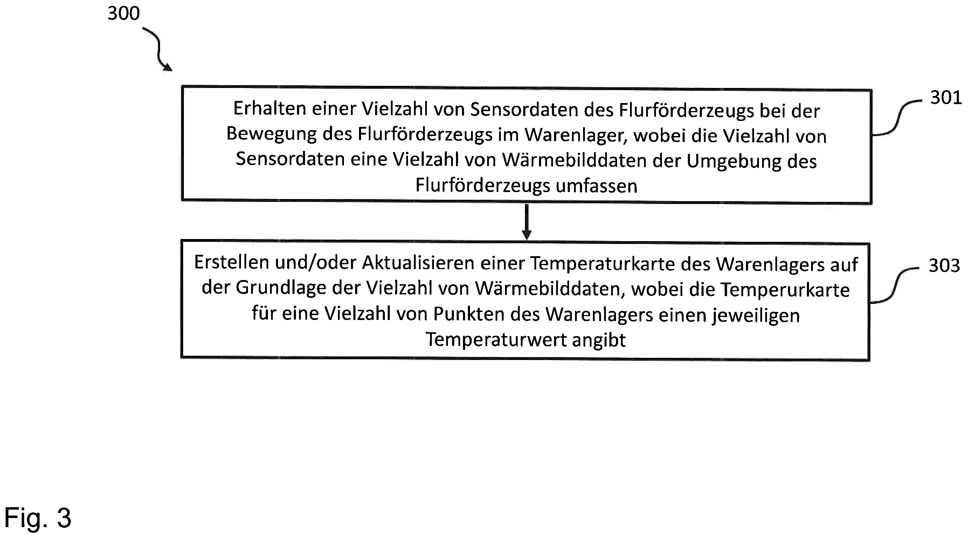

Figur 3 zeigt ein Flussdiagramm mit Schritten eines Verfahrens 300 zum Betreiben eines Flurförderzeugs 120a zum Transport von Warenobjekten 140 in einem Warenlager. Das Verfahren umfasst einen Schritt 301 des Erhaltens einer Vielzahl von Sensordaten des Flurförderzeugs 120a bei der Bewegung des Flurförderzeugs 120a im Warenlager, wobei die Vielzahl von Sensordaten eine Vielzahl von Wärmebilddaten der Umgebung des Flurförderzeugs 120a umfassen. Ferner umfasst das Verfahren 300 einen Schritt 303 des Erstellens und/oder Aktualisierens einer Temperaturkarte des Warenlagers auf der Grundlage der Vielzahl von Wärmebilddaten, wobei die Temperaturkarte für eine Vielzahl von Punkten des Warenlagers einen jeweiligen Temperaturwert angibt.

Das erfindungsgemäße Verfahren 300 kann mittels der erfindungsgemäßen Datenverarbeitungsvorrichtung 123, 110 durchgeführt werden. Daher ergeben sich weitere Ausführungsformen des erfindungsgemäßen Verfahrens 300 aus den vorstehend und nachstehend beschriebenen Ausführungsformen der erfindungsgemäßen Datenverarbeitungsvorrichtung 123, 110.

## Patentansprüche

1. Datenverarbeitungsvorrichtung (123; 110) zum Betreiben eines Flurförderzeugs (120a) zum Transport einer Vielzahl von Warenobjekten (140) in einem Warenlager, wobei die Datenverarbeitungsvorrichtung (123; 110) umfasst:
eine Schnittstelle (123b; 113), welche ausgebildet ist, eine Vielzahl von Sensordaten des Flurförderzeugs (120a) bei der Bewegung des Flurförderzeugs (120a) im Warenlager zu erhalten, wobei die Vielzahl von Sensordaten eine Vielzahl von Wärmebilddaten der Umgebung des Flurförderzeugs (120a) umfassen; und
eine Prozessoreinrichtung (123a; 111), welche ausgebildet ist, auf der Grundlage der Vielzahl von Wärmebilddaten eine Temperaturkarte des Warenlagers zu erstellen und/oder zu aktualisieren, wobei die Temperaturkarte für eine Vielzahl von Punkten des Warenlagers einen jeweiligen Temperaturwert angibt.

2. Datenverarbeitungsvorrichtung (123; 110) nach Anspruch 1, wobei die Vielzahl von Sensordaten des Flurförderzeugs (120a) ferner eine Vielzahl von Positionsdaten des Flurförderzeugs (120a) umfassen und wobei die Prozessoreinrichtung (123a; 111) ausgebildet ist, auf der Grundlage der Vielzahl von Wärmebilddaten und der Vielzahl von Positionsdaten die Temperaturkarte des Warenlagers zu erstellen oder zu aktualisieren.

3. Datenverarbeitungsvorrichtung (123; 110) nach Anspruch 2, wobei die Prozessoreinrichtung (123a; 111) ferner ausgebildet ist, auf der Grundlage der Vielzahl von Positionsdaten des Flurförderzeugs (120a) Steuersignale für das Flurförderzeug (120a) zu erzeugen, wobei die Steuersignale ausgebildet sind, das Flurförderzeug (120a) in dem Warenlager zu bewegen.

4. Datenverarbeitungsvorrichtung (123; 110) nach einem der vorhergehenden Ansprüche, wobei die Prozessoreinrichtung (123a; 111) ferner ausgebildet ist, auf der Grundlage der Sensordaten mittels eines Objekterkennungsmechanismus die Warenobjekte (140) der Vielzahl von Warenobjekten (140) zu erkennen und auf der Grundlage der Temperaturkarte für jedes erkannte Warenobjekt (140) eine Temperatur zu bestimmen.

5. Datenverarbeitungsvorrichtung (123; 110) nach Anspruch 4, wobei der Objekterkennungsmechanismus ein künstliches neuronales Netzwerk umfasst, welches ausgebildet ist, die Warenobjekte (140) der Vielzahl von Warenobjekten (140) zu erkennen und auf der Grundlage der Temperaturkarte für jedes erkannte Warenobjekt (140) eine Temperatur zu bestimmen.

6. Datenverarbeitungsvorrichtung (123; 110) nach einem der vorhergehenden Ansprüche, wobei die Prozessoreinrichtung (123a; 111) ferner ausgebildet ist, auf der Grundlage der Temperaturkarte mittels eines Überwachungsmechanismus zu überwachen, ob die Temperatur an einem oder mehreren der Vielzahl von Punkten im Warenlager in einem jeweiligen vordefinierten Temperaturbereich liegt.

7. Datenverarbeitungsvorrichtung (123; 110) nach Anspruch 6, wobei der Überwachungsmechanismus ein künstliches neuronales Netzwerk umfasst, welches ausgebildet ist, zu überwachen, ob die Temperatur an einem oder mehreren der Vielzahl von Punkten im Warenlager in einem jeweiligen vordefinierten Temperaturbereich liegt.

8. Flurförderzeug (120a), insbesondere Gabelstapler (120a), zum Transport einer Vielzahl von Warenobjekten (140) in einem Warenlager, wobei das Flurförderzeug (120a) eine Datenverarbeitungsvorrichtung (123) nach einem der vorhergehenden Ansprüche und eine Wärmebilderfassungseinrichtung (130a) umfasst, wobei die Wärmebilderfassungseinrichtung (130a) ausgebildet ist, die Vielzahl von Wärmebilddaten der Umgebung des Flurförderzeugs (120a) zu erfassen.

9. System (100) zum Betreiben einer Vielzahl von Flurförderzeugen (120a,b) in einem Warenlager, wobei das System (100) umfasst:
eine Vielzahl von Flurförderzeugen (120a,b) nach Anspruch 8; und
eine Datenverarbeitungsvorrichtung (110) nach einem der Ansprüche 1 bis 7 zum Betreiben der Vielzahl von Flurförderzeugen (120a,b) in dem Warenlager.

10. Verfahren (300) zum Betreiben eines Flurförderzeugs (120a) zum Transport einer Vielzahl von Warenobjekten (140) in einem Warenlager, wobei das Verfahren (300) umfasst:
Erhalten (301) einer Vielzahl von Sensordaten des Flurförderzeugs (120a) bei der Bewegung des Flurförderzeugs (120a) im Warenlager, wobei die Vielzahl von Sensordaten eine Vielzahl von Wärmebilddaten der Umgebung des Flurförderzeugs (120a) umfassen; und
Erstellen und/oder Aktualisieren (303) einer Temperaturkarte des Warenlagers auf der Grundlage der Vielzahl von Wärmebilddaten, wobei die Temperaturkarte für eine Vielzahl von Punkten des Warenlagers einen jeweiligen Temperaturwert angibt.
